# EUROPÄISCHE PATENTANMELDUNG

(11) **EP 1 850 427 A1**
(43) Veröffentlichungstag der Anmeldung: **31.10.2007**
(21) Anmeldenummer: 06008989.3
(22) Anmeldetag: 29.04.2006
(51) Int. Cl.: H01S 3/097, H01S 3/03, H01S 3/10, H01S 3/038, H01S 3/08, H01S 3/22

(54) **Injektionssynchronisierung eines Gaslasers mit inkohärentem Licht zur Frequenzstabilisierung**

(71) Anmelder: Technomedica AG, 8852 Wollerau (CH)
(72) Erfinder: Linder, Patrick, 5318 Mandach (CH); Haldimann, Adrian, 3303 Jegenstorf (CH)
(74) Vertreter: Irniger, Ernst

(57) **Zusammenfassung**

Eine Laseranordnung weist einen Laserstab oder ein Laserrohr (3) sowie einen Hochspannungsanschluss (19) für das Erzeugen des Laserstrahls auf. Diese Laseranordnung verfügt zusätzlich zum Hochspannungsanschluss über mindestens eine elektromagnetische Strahlungsquelle (25) im Bereich des Laserstabes oder Laserrohres welche zum Zünden des Lasers vorgesehen ist. Der Laser weist die gesonderte Funktion auf, dass er mittels zusätzlicher Strahlungsquelle gezündet werden kann. Essentielle Merkmale sind: Zündung durch Einwirkung externer elektromagnetischer Strahlenquelle, beispielsweise Licht, Röntgenstrahlen, Mikrowellen oder andere elektromagnetische Wellen. Im Weiteren weist der Laser die Besonderheit auf, dass bei einem so genannten Mischlicht, Weislicht oder Mischfrequenz Laser oder Maser, nicht das ganze Spektrum in der Emission des Lasers oder auch Masers emittiert wird, sondern nur die durch die zusätzliche Strahlenquelle angeregte Strahlung. Als elektromagnetische Strahlungsquelle (25) eignet sich besonders eine LED oder eine Hg-Dampflampe mit Farbfilter.

## Beschreibung

Die vorliegende Erfindung betrifft eine Anordnung zum Erzeugen elektromagnetischer Strahlung, wie insbesondere eine Laseranordnung gemäss dem Oberbegriff nach Anspruch 1, ein Verfahren zum Zünden und Betreiben einer elektromagnetischen Strahlung sowie zum Betrieb einer Laseranordnung sowie Verwendungen und Anwendungen der Anordnungen des Verfahrens.

Das Anregen einer elektromagnetischen Strahlung, wie beispielsweise eines Lasers beziehungsweise Erzeugen eines Laserstrahls in einem Laserrohr kann beispielsweise mittels Hochspannung erfolgen, insbesondere beim Betrieb eines so genannten Gas-Lasers. Dabei wird eine ausreichende Spannung angelegt zum Erzeugen des Lasereffekts oder -strahl, wobei die Stärke der Spannung u.a.m. abhängig ist von der Länge des Rohres, dem Druck, gegebenenfalls von den verwendeten Gasen, etc.

Bei Gas-Lasern werden in der Regel Gase oder Gas-Gemische verwendet, welche geeignet sind bestimmte elektromagnetische Wellen bzw. Farben oder Farbgemische zu erzeugen wie beispielsweise Helium-Neon-Gemisch, Argon, Argon-CO₂-Gemisch, CO₂, Krypton-Gemisch etc.

Durch Verwendung von unterschiedlichen Gasgemischen ist es möglich so genannte Buntlicht- oder gar Weisslichtlaser zu erzeugen. Nachteilig dabei ist allerdings, dass nicht erwünschte Farbanteile mittels zusätzlicher optischer Anordnungen wie beispielsweise mittels Prismen, Farbfilter, etc. ausgefiltert werden müssen. Dies führt aber zu einem Verlust der effektiven Leistung gegenüber der aufgewendeten Leistung.

Es ist daher eine Aufgabe der vorliegenden Erfindung eine Massnahmen vorzuschlagen, welche eine Farbfilterung, respektive die Erzeugung eines Laserstrahls mit einer genau definierten Wellenlänge ermöglicht, ohne die Notwendigkeit einer zusätzlichen Filteranordnung.

Erfindungsgemäss wird eine Anordnung zum Zünden und Betreiben einer elektromagnetischen Strahlung, wie insbesondere eine Laseranordnung gemäss dem Wortlaut nach Anspruch 1 vorgeschlagen.

Die erfindungsgemäss vorgeschlagenen Laseranordnung weist den üblicherweise verwendeten Laserstab oder ein Laserrohr auf sowie einen Hochspannungsanschluss für den Betrieb des Laserstrahls wobei zusätzlich zur Möglichkeit des Betriebs mittels Hochspannung mindestens eine elektromagnetische Strahlungsquelle wie beispielsweise eine Lichtquelle im Bereich entlang des Laserstabes oder Laserrohres zum Zünden des Lasers vorgesehen ist.

Gemäss einer Ausführungsvariante handelt es sich bei der elektromagnetischen Strahlungsquelle um eine Diodenanordnung, wobei beispielsweise entlang des Laserstabes oder Laserrohres mehrere Dioden vorzugsweise in Linie angeordnet sind. Dabei wird eine Diodenanordnung verwendet mit einer Lichtleistung welche ausreicht, um in Ergänzung zur angelegten Spannung den Laser zu zünden.

Die Diodenanordnung weist eine bestimmte Emission elektromagnetischer Wellen auf bzw. das von den Dioden emittierte Licht eine bestimme Wellenlänge, welche derjenigen Wellenlänge bzw. Farbe entspricht, welche aus dem im Laserrohr oder Laserstab anregbaren Wellenlänge bzw. Farben auszuwählen ist. Es kann nur elektromagnetische Strahlung erzeugt werden, welche durch ihre physikalischen Eigenschaften auch im Medium (Laserrohr/Laserstab etc.) erzeugt werden kann.

Die Dioden der Diodenanordnung werden vorzugsweise gepulst betrieben.

Wiederum gemäss einer weiteren Ausführungsvariante ist es möglich, mehrere Diodenanordnungen entlang des Laserstabes bzw. Laserrohres anzuordnen, wobei die einzelnen Diodenanordnungen unterschiedliche Lichtwellenlängen emittieren. Als elektromagnetische Strahlungsquellen sind u.a. auch IR-Strahlen, Röntgenstrahlen, Mikrowellen, usw. oder eine Kombination der verschiedenen Strahlungsquellen denkbar.

Weitere bevorzugte Ausführungsvarianten der Laseranordnung sind in den abhängigen Ansprüchen charakterisiert.

Weiter vorgeschlagen wird ein Verfahren zum Zünden und Betreiben einer elektromagnetischen Strahlung bzw. zum elektromagnetischen Zünden einer Lichtquelle gemäss dem Wortlaut nach Anspruch 16.

Erfindungsgemäss wird vorgeschlagen zunächst eine Spannung mittels Hochspannungsanschluss anzulegen, welche knapp unterhalb der Zündspannung liegt oder lediglich ein unstabiles Zünden der Strahlungsquelle bzw. Lichtquelle ermöglicht und anschliessend das Zünden und Betreiben der Strahlungsquelle bzw. Lichtquelle mittels einer zusätzlichen Strahlungsquelle zu erreichen. Der Vorteil dieser Verfahrensweise zum Zünden und Betreiben einer elektromagnetischen Strahlung bzw. Lichtquelle, wie insbesondere eines Lasers, liegt darin, dass zunächst nicht eine unnötig hohe Hochspannung angelegt werden muss, welche eine starke Beanspruchung der Strahlungsanordnung mit sich bringt, unnötig Wärme erzeugt und sehr Energie-intensiv ist. Zudem kann durch das Zünden mittels der zusätzlichen Strahlungsquelle anschliessend an das Zünden eine Optimierung der notwendigen Spannung erfolgen, mittels welcher die Strahlungsanordnung bzw. der Laser zu betreiben ist.

Im Speziellen vorgeschlagen wird ein Verfahren zum Erzeugen eines Laserstrahls mit gewünschter Wellenlänge, indem an einem mittels Hochspannung betriebenen Laser nur zu einem Teil die für das Zünden des Lasers notwendige Spannung angelegt wird und das Zünden des Lasers mittels einer zusätzlichen elektromagnetischen Strahlungsquelle wie einer Lichtquelle erfolgt.

Sowohl die erfindungsgemässe Laseranordnung wie auch das Verfahren sind an sich für jede Art von Laser, Maser etc. denkbar, bevorzugt aber stehen Gas-Laser mit Mischgasen zu Diskussion.

Mögliche Anwendungsgebiete sind beispielsweise Bildprojektion, Lichtvorführungen, das Erzeugen von bestimmten Lasereffekten, die Verwendung zur Belichtungszwecken oder die Verwendung spezieller Laser in der Forschung. Vorstellbar sind zudem Medizinal-Laser mit grosser Leistung, kleinem Energieverbrauch sowie wenig Platzbedarf und verschiedenen genau abgestimmter Wellenlängen.

Das erfindungsgemäss Beschriebene Laserprinzip hat gegenüber herkömmlichen Gas-Lasern den folgenden grossen Vorteil:
Bedingt durch die wellenlängeorientierte Anregung mittels beispielsweise einer zusätzlichen Lichtquelle emittiert der Laser nur die gewünschte Wellenlänge und deren Moden, was in der Regel bei gasgefüllten Mischlicht- oder Weisslichtlaser nicht möglich ist. So muss z.B. bei einem Argon-Laser der nicht gewünschte Anteil mittels Prismen, Farbfilter oder beschichteter Spiegel ausgefiltert werden, was beim Betrieb ein Verlust der effektiven Leistung gegenüber der aufgewendeten Leistung darstellt. Dies hat zudem eine stärkere Erwärmung sowie eine höhere Leistungsaufnahme des Lasers zu folge.

Ein weiterer Vorteil der vorliegenden Erfindung bzw. der beschriebenen bevorzugten Art des Gas-Laser-Pumpens besteht in einer wesentlich schnelleren Modulationsmöglichkeit was beispielsweise bei einer Modulation 4.31818 MHz eine Bildauflösung von 640 x 400 Punkten ermöglicht was beispielsweise eine Bildfolge von 25 Vollbildern zur Folge hat. Unter entsprechenden Bedingungen war im Stand der Technik nur eine Wiedergabe von 256 Farben möglich. Dies sind selbstverständlich sind dies nicht absolute Grenzwerte, denn bei heute üblicherweise erhältlichen schnellen LEDS oder anderen schnelleren Halbleiter ist gar noch eine bessere Auflösung und eine höhere Farbtiefe möglich. Ein wiederum weiterer Vorteil infolge der kleineren Verlustleistung liegt in der kleineren Bauweise und damit in einer preisgünstigeren Herstellung.

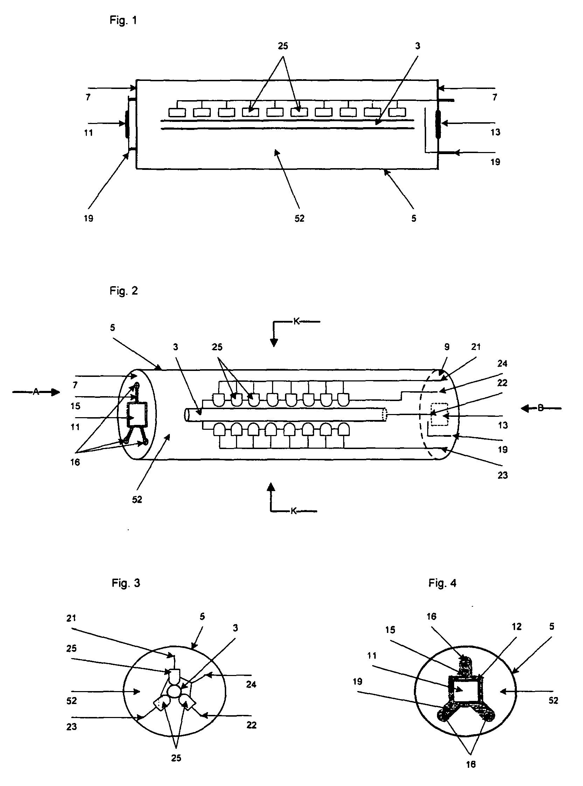

Das vermutliche Prinzip beruht darauf, dass in dem Gasgemisch gefüllten Laserrohr folgendes passiert:
Durch das Anlegen einer Hochspannung werden die in der Gasmischung vorhandenen Atome oder Moleküle, von einem niedrigeren in ein höheres Energieniveau gebracht. Die Hochspannung wird so gewählt dass sich die Elektronen kurz davor befinden in ein niedrigeres Energieniveau zurückzuspringen. Dabei ist bekanntlich die Spannung abhängig von Temperatur, Rohrlänge, Druck und verwendetem Gas. Nun wird mittels um das innere Rohr angebrachten Lichtquellen (erfindungsgemäss wird beispielsweise die Verwendung von LEDS vorgeschlagen wie in Fig. 1 gezeigt) elektromagnetische Strahlung, wie beispielsweise Photonen, in die bereits angeregt Gasmischung eingestrahlt. Die dabei einfallende elektromagnetische Strahlung in Form von Photonen einer oder mehrerer definierten Wellenlänge (niedriger Leistung sorgen bei dieser Art stimulierter Emission dafür, dass nur die Atome (auch für Moleküle und Festkörper) in der Gasmischung die durch die einfallende elektromagnetische Strahlung angeregt werden können, von einem höheren in ein niedrigeres Energieniveau übergehen und dabei ein zweites Photon emittieren, welches die gleichen optischen Eigenschaften aufweist (Phase, Wellenlänge) wie das Einfallende (durch LED emittierte). Die anderen Atome(stellvertretend auch für Moleküle und Festkörper) welche nicht angeregt werden bleiben im höheren Energieniveau und nehmen keine weitere Energie mehr auf, das heisst der Stromverbrauch wird kleiner da zum weiteren Betrieb nur soviel Energie aufgewendet werden muss um die ins niedere Energieniveau zurückgegangenen Atome wieder in ein höheres Energieniveau zu bringen (höherer Wirkungsgrad). Als Ergebnisse resultiert ein Verstärkungsvorgang, welcher im Laserrohr zur Lichterzeugung genutzt wird. Das heisst zwischen dem 100% und dem Auskoppelspiegel gibt es eine stimulierte Oszillation die als Laserstrahl einer oder mehrerer bestimmter Wellenlänge (n) / Phase(n) durch den Austrittsspiegel ausgekoppelt. So entsteht die erfindungsgemäss erwünschte stimulierte Emission lediglich in denjenigen oder derjenigen Wellenlänge(n), welche durch die externe elektromagnetische(n) Strahlungsquelle(n) angeregt wird oder werden.

Im Allgemeinen wird Licht beim Durchgang durch ein Medium durch Absorbtion geschwächt statt verstärkt. Grund hierfür ist der Umstand, dass sich im thermischen Gleichgewicht eine grössere Anzahl von Atomen im niedrigen Energiezustand befinden und daher die Absorbtion gegenüber der Emission dominiert. Eine wesentliche Voraussetzung für die Laserverstärkung ist die Bevölkerungsinversion, d h ein Zustand, in dem sich mehr Atome in einem höheren Energieniveau befinden als im tieferen. Solch eine Inversion wird durch Zuführen von optischer (elektromagnetischer) Leistung (wie beim Helium-Neon-Laser) bewirkt.

Das heisst zuerst, wird eine Hochspannung bis knapp an das Rücksprungniveaus der Elektronen vom höheren in ein niedrigeres Energieniveau angelegt (Hochspannung am Glasrohr Anode/Kathode), dann zum Auslösen des Rücksprungs wird über eine oder mehrere Zündquelle(n) (LED etc.) Photonen einer oder verschiedener Wellenlängen in das innere Laserrohr gebracht und somit der Rücksprung unter Abgabe eines Photons eingeleitet was wiederum in der Gasmischung einen Lawineneffekt auslöst und die stimulierte optische Oszillation einleitet und anschliessend zur verstärkten elektromagnetischen Strahlungsemission durch den Auskoppelspiegel führt (Laserstrahl). Eine LED vom 720nm löst nur Photonen von derselben Wellenlänge aus.

Erklärend ist hier erwähnt, dass auch wenn ein Laser (ein He Ne Laser) auch nur einmal gezündet werden muss, und sich danach "selbst" erregt, und nur noch eine Betriebspannung anliegt. Als Beispiel sei hier ein He Ne Laserrohr der Firma "Meles Griot" erwähnt, dass beispielsweise eine Zündspannung von 1,6 EV benötigt und danach auf eine Betriebsspannung von 200 V zurückfällt.

Bei der Verwendung eines Gas-Lasers können beispielsweise Argon-CO₂ oder andere Mischgas-Laser als Weisslicht- oder so genannte Mischlicht- oder Buntlichtlaser verwendet werden. Dass heisst die meisten der sichtbaren Wellenlängen können darin entstehen bzw. angeregt werden, wobei selbstverständlich die Wellenlänge der Lichtquelle mit einer der in der Laseranordnung anzuregenden Wellenlängen übereinstimmen muss.

Die Erfindung wird nun beispielsweise und unter Bezug auf die beigefügten Figuren näher erläutert.

Dabei zeigen:
- Fig. 1: schematisch im Längsschnitt eine erfindungsgemässe Laseranordnung für das Erzeugen eines Laserstrahles einer gewünschten Wellenlänge,
- Fig. 2: schematisch im Längsschnitt eine spezifische Ausführungsvariante einer erfindungsgemässen Laseranordnung,
- Fig. 3: einen Querschnitt entlang der Linie K-K durch die Laseranordnung gemäss Fig. 2,
- Fig. 4: gesehen in Pfeilrichtung A eine endseitige Abdeckung der Laseranordnung aus Fig. 2,
- Fig. 5: gesehen in Pfeilrichtung B eine endseitige Abdeckung der Laseranordnung aus Fig. 2,
- Fig. 6: eine weitere Ausführungsvariante einer erfindungsgemässen Laseranordnung,
- Fig. 7: schematisch im Querschnitt eine endseitige Abdeckung der Laseranordnung analog derjenigen in Fig. 4 mit Adjustiervorrichtung zum adjustieren des Auskoppelungsspiegels,
- Fig. 8: analog Fig. 7 eine endseitige Abdeckung gemäss Fig. 4 jedoch mit elektronischer Spiegeleinstellung,
- Fig. 9: wiederum eine weitere Ausführungsvariante einer erfindungsgemässen Laseranordnung mit Zündquelle die mittels, elektromagnetischer Strahlung leitender Zuführung, ausserhalb des Laserrohres angebracht ist, und
- Fig. 10: im Längsschnitt einer Laseranordnung zusätzlich aufweisend eine Einrichtung für das Beaufschlagen des Laserrohres mit unterschiedlichen Gasen bzw. Gasgemischen.

In der Laseranordnung, dargestellt schematisch in Fig. 1 ist in einem äusseren beispielsweise aus Quarzglas bestehenden Rohr 5 innen das eigentliche Laserrohr 3 angeordnet, in welchem das Gas bzw. eine bestimmte Gasmischung angeordnet ist wie beispielsweise Helium-Neon-Gas, Kryptongas, eine Argon-CO₂-Mischung etc.. Für das Zünden bzw. Betreiben des Gas-Lasers ist ein Hochspannungsanschluss 19 vorgesehen. Je stirnseitig der jeweiligen Abdeckung 7 vorgelagert sind die beiden Spiegel 11 und 13 zum Erzeugen des Laserstrahls als Resonator angeordnet.

Erfindungsgemäss wird nun vorgeschlagen, entlang dem inneren Laserrohr 3 zusätzliche Lichtquellen wie beispielsweise LEDS 25 anzuordnen, mittels welchen der eigentliche Laserstrahl gezündet wird.

Der Betrieb des erfindungsgemäss vorgeschlagenen Lasers erfolgt wie nachfolgen beschrieben:
Zunächst wird diejenige Hochspannung ermittelt bei welcher der Laserstrahl gezündet wird. Nun wird die Spannung auf beispielsweise einen Wert knapp unterhalb der Zündspannung reduziert, wodurch der Laser nicht gezündet wird. Zum Zünden des Lasers werden die Lichtquellen wie die LEDS 25 verwendet, deren Leistung derart ist, dass ein Zünden des Lasers ermöglicht wird.

Mittels der von den LEDS emittierten Wellenlänge wird im Laserrohr genau die Wellenlänge angeregt, welche aus dem Mischlicht des Lasers auszuwählen ist. Dabei versteht es sich von selbst, dass aufgrund der Laseranordnung, welche limitiert durch den Abstand der beiden Spiegel 11 und 13 und das verwendete Gasgemisch nur eine begrenzte Anzahl Wellenlängen zulässt, die Wellenlänge der Lichtquelle einer dieser ausgewählten Wellenlängen entsprechen muss. Beträgt beispielsweise der Abstand zwischen den Spiegeln 1 Meter, so muss die Wellenlänge der Lichtdioden einen Wert von beispielsweise 100nm, 200nm, etc. sowie ½λ oder jede in diesem Meter teilbare Wellenlänge aufweisen, da ansonsten eine Anregung gar nicht möglich ist.

Figur 2 zeigt schematisch im Längsschnitt eine spezifische Ausführungsvariante einer erfindungsgemässen Laseranordnung 1. Wiederum ist in einem äusseren Rohr, wie beispielsweise Glasrohr 5, welches je stirnseitig durch Abdeckungen 7 und 9 hermetisch abgeschlossen ist, ein Laserrohr 3 angeordnet, in welchem das gewünschte Gas beziehungsweise die gewünschte Gasmischung vorhanden ist. Das innere Rohr sollte gegenüber dem äusseren Rohr nicht hermetisch verschlossen sein, so dass das Gas zwischen dem Inneren (eigentlichem Laserrohr) und dem Äusseren zirkulieren kann.

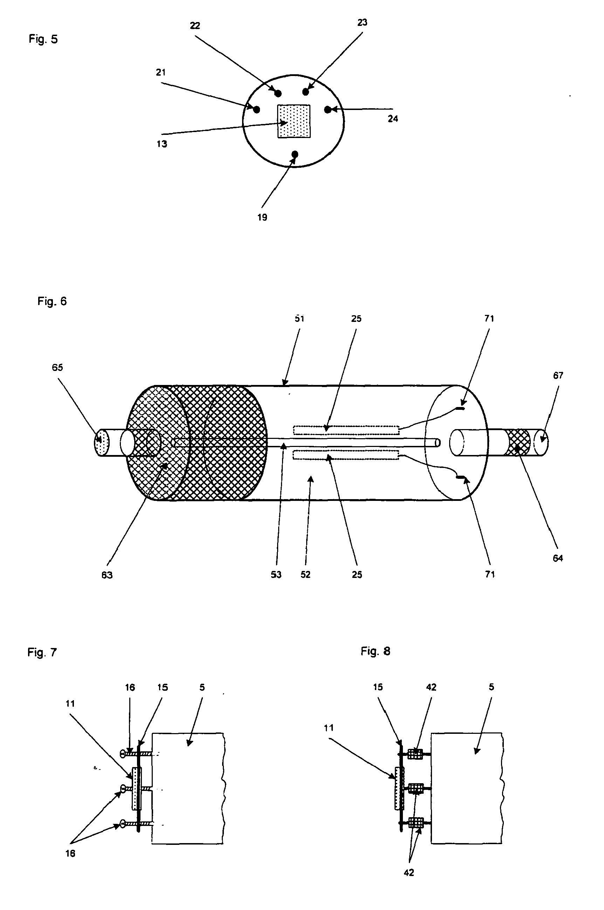

Je stirnseitig den beiden Abdeckungen 7 und 9 sind die beiden Reflektorspiegel 11 und 13 angeordnet, welche in einem genau vorbestimmten Abstand und planparallel zueinander angeordnet sein müssen. Für die Adjustierung des Abstandes und der Planparallelität ist der Spiegel 11 auf der Abdeckung 7 mittels einer speziellen Halterung 15 angeordnet, welche zusätzlich in Figur 4 vergrössert und in Detail dargestellt ist. Durch Schraubverbindungen 16, mittels welcher die Halterung an der Abdeckung 7 befestigt ist. Die genaue Adjustierung des Spiegels wird unter Bezug auf die Figuren 7 und 8 näher beschrieben.

Weiter ist an der Abdeckung 9 ein Anschluss 19 für das Anlegen der Hochspannung vorgesehen, wobei am gegenüberliegenden Ende des Rohres 5 der Anschluss beispielsweise über die Schenkel 15 der Halterung 15 erfolgen kann, welche beispielsweise aus einem gut leitenden Material gefertigt sind. Durch zusätzliche Metalleinrahmung 12 um den Spiegel 11 ist das Erzeugen eines gleichmässigen Hochspannungsfeldes möglich.

Innenliegend im beispielsweise aus einem Quarzglas hergestellten Rohr 5 sind LEDS 25 angeordnet, welche an entsprechenden Halteplatten 27 fest angeordnet sind. Die LEDS 25 sind derart gegen das innere Laserrohr 3 gerichtet platziert, um eine optimale Belichtung bzw. Anregung des Gases oder Gemisches zu ermöglichen.

Anhand Figur 3, welche einen Querschnitt entlang der Linie I-I durch das Rohr 5 zeigt, ist die Position der Leuchtdioden 25 besser dargestellt. Für die Speisung der LEDS sind seitlich von der Abdeckung 9 vorstehend Anschlüsse 21 und 23 vorgesehen.

In einer Anordnung, dargestellt in Figur 2, ist es nun möglich in ein und derselben Laseranordnung unterschiedliche Lichtquellen bzw. LEDS für das Zünden eines Lasers zu verwenden, wobei die LEDS unterschiedliche Farben emittieren. So können die drei LEDS Anordnungen, welche deutlich in Figur 3 erkennbar sind, sowohl rotes, grünes wie auch blaues Licht anregen, wobei, falls gleichzeitig betrieben, auch das Anregen einer Mischfarbe möglich ist. Durch die Verwendung weiterer LED Anordnungen ist es möglich weiter elektromagnetische Strahlung zu erzeugen, wie beispielsweise auch im ultraviolett oder infrarot Spektrum.

Aufgrund der Tatsache, dass für das Erzeugen eines bestimmten monochromatischen Farbstrahls nur eine Wellenlänge im Laserrohr angeregt werden muss, kann die erfindungsgemässe Laseranordnung mit einer geringeren Leistung betrieben werden, was natürlich auch zu einer geringeren Wärmeentwicklung führt. Damit entfällt gegebenenfalls die Notwendigkeit einer Kühlung, welche was beim Betreiben von herkömmlichen Lasern üblicherweise verwendet wird, respektive ggf. nur minimale Kühlung mit weniger Leistung und kleinerer Dimension ist notwendig.

Wie bereits vorab erwähnt wird zusätzlich in Fig. 4 in Pfeilrichtung A gesehen die Abdeckung 7 der Laseranordnung auf Fig. 2 vergrössert und im Detail dargestellt. Die Halterungen 15 und Schraubverbindungen 16, mittels welcher die Halterung an der Abdeckung 7 befestigt ist ermöglichen eine genaue Adjustierung des Spiegels 11. Figur 5 zeigt in Pfeilrichtung B in Figur 4 die gegenüberliegende Abdeckung bzw. Rückseite 9 beinhaltet den 100% Reflektionsspiegel 13. In dieser Rückseitigen Abdeckung angeordnet sind die diversen LED-Anschlüsse 21, 22 und 23 sowie der LED-Masseanschluss 24. Schliesslich erkennbar ist der Hochspannungsanschluss 19.

Figur 6 zeigt eine weitere Ausführungsvariante einer erfindungsgemässen Laseranordnung, bei welcher wiederum in einem äusseren Glasrohr 51 innen liegend ein Gaslaserrohr 53 angeordnet ist. Je seitlich von den Abdeckungen vorstehend, sind wiederum Spiegel 65 und 67 vorgesehen. Für das Anlegen der Hochspannung ist einerseits ein Anschluss 61 vorgesehen der die hülsenartig angeordnete Metallkathode 63 verbindet, sowie einer Metallanode 64 auf der anderen Seite. Anstelle der in Figur 2 vorgesehenen Vielzahl einzelner LEDS, wird nun gemäss Figur 5 vorgeschlagen entlang des inneren Laserrohrs so genannte LED-Bars anzuordnen, was beispielsweise einen wesentlich höheren Wirkungsgrad beim Zünden des Laserstrahls ergibt. Wiederum ist das Laserrohr 53 mit einem Gas gefüllt wie beispielsweise mit einer Argon-CO₂-Gasmischung, Helium-Neon-Gas, etc.

Wie bereits vorab erwähnt soll anhand der Figuren 7 und 8 die genaue Adjustierung des Auskoppelungsspiegels angeordnet in der Abdeckung 7 näher erläutert werden. Der Auskoppelungsspiegel 11 ist auf einer Halterung 15 angeordnet, welche ihrerseits wie in Figur 7 dargstellt mittels Schraubverbindungen 16 mit dem Rohr 5 verbunden ist. Wie in der Schnittdarstellung gemäss Figur 7 deutlich erkennbar ist nun möglich manuell mittels der Schraubverbindungen 16 den Spiegel 11 zu adjustieren bzw. genau auf den Rückseitig angeordneten Reflektionsspiegel 13 auszurichten.

In Figur 8, wiederum darstellend einen Schnitt durch die frontseitige Abdeckung 7 sind die Schraubverbindungen 16 durch elektronische Spiegeleinstellungen 42 wie beispielsweise PIEZO-Elemente, Elektromotorelemente, etc. ersetzt. Die Adjustierung kann entsprechend der Anordnung wie dargestellt in Figur 8 automatisiert erfolgen.

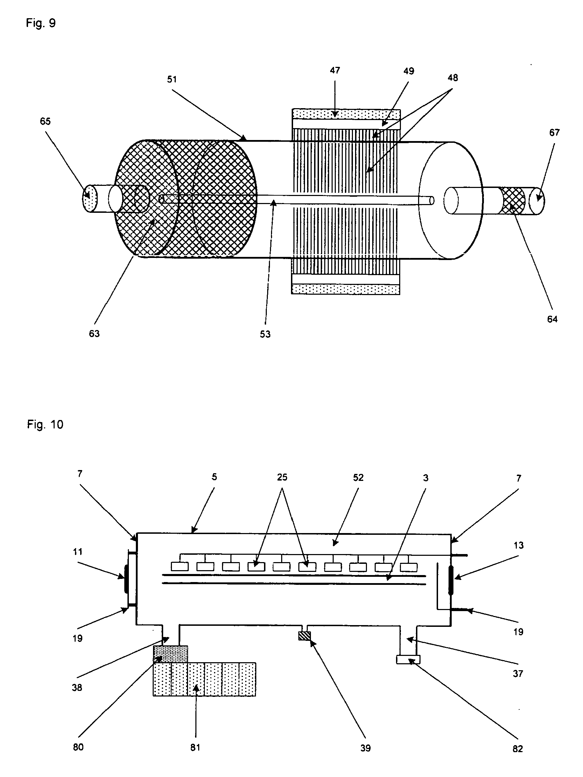

Figur 9 zeigt ähnlich der Ausführungsvariante gemäss Figur 6 eine weitere erfindungsgemässe Laseranordnung bei welcher aber nun die Anregung mittels der elektromagnetischen Strahlung von Ausserhalb des Glasrohres erfolgt. Dabei wird zunächst die von einer Strahlungsquelle 47 wie beispielsweise einer Zündlichtquelle erzeugte Strahlung durch einen Farbfilter oder Wellenlängenverdoppler geführt, wobei es sich beispielsweise beim Wellenlängenverdoppler um Neodym handeln kann, um Itrium-Aluminium-Granatkristalle oder andere mit diesem Effekt. Mit anderen Worten wird beispielsweise die von der Strahlungsquelle emittierte Strahlung mit zum Beispiel 1064 Nanometer (Infrarot) durch die Kristallschicht 49 verdoppelt, wodurch eine Strahlung mit 532 Nanometer resultiert. Anschliessend an den Frequenzverdoppler wird die Strahlung wie beispielsweise die elektromagnetische Zündstrahlungsquelle durch Strahlungswellenleiter zum Gaslaserrohr 23 geführt, wobei die "Lichtwellenleiter" über eine grosse Temperaturbeständigkeit zu verfügen haben. Der grosse Vorteil dieser Anordnung liegt darin, dass einerseits durch die Frequenzverdoppelung Strahlung erzeugt werden kann, für welche im Normalfall keine entsprechende Lichtquelle vorhanden ist. Im Weiteren wird die Wärme in Folge der Strahlung primär ausserhalb des Glasrohres 51 erzeugt, wodurch die Kühlung am Glaslaserrohr 53 entfällt oder zumindest nur über eine geringe Leistung zu verfügen hat.

Die übrigen Bestandteile der Laseranordnung gemäss Figur 9 entsprechen denjenigen der Anordnung aus Figur 6, dass heisst je beidseits endständig in Bezug zum Glaslaserrohr 53 sind die beiden Spiegel 65 und 67 angeordnet sowie zur Erzeugung der Hochspannung die hülsenartig angeordnete Metallkathode 63 sowie am gegenüberliegenden Ende die Metallanode 64.

Als Lichtquelle 47 kann beispielsweise eine Quecksilberdampflampe oder eine Weisslichtquelle oder eine andere geeignete Strahlungsquelle verwendet werden. Anstelle der Frequenzverdoppelung kann natürlich auch ein Frequenzfilter angeordnet werden, um spezifisch eine oder mehrere Wellenlängen herauszufiltrieren.

In Figur 10 schliesslich wird wiederum eine weitere Ausführungsvariante einer erfindungsgemässen Laseranordnung im Längsschnitt dargestellt, wobei das Grundprinzip des Lasers denjenigen Beschrieben unter Bezug auf Figur 1 entspricht. Das wesentliche Merkmal der Laseranordnung gemäss Figur 10 liegt darin, dass in ein und derselben Laseranordnung mit unterschiedlichen Gasen bzw. Gasgemischen gearbeitet werden kann. Zu diesem Zwecke sind am äusseren Rohr 5 mindestens zwei Anschlussöffnung 37 und 38 vorgesehen, wobei es sich einerseits um einen Einfüllstutzen 38 handelt sowie um einen Ventilstutzen 37.

Am Rohr vorgesehen ist/sind ein oder mehrere Sensor(en) 39 für das Erfassen bzw. Bestimmen des im Rohr befindlichen Gasgemisches, Druckes, etc. Vorgelagert am Einfüllstutzen 38 ist eine Mischbatterie 80 für das Mischen verschiedener Gase, welche in den verschiedenen Gastanks 81 gelagert sind. Beim Ventilstutzen 37 schliesslich ist ein Ablass- bzw. Überdruckventil 82 vorgesehen.

Gemäss der Laseranordnung wie dargestellt in Figur 10 ist es nun möglich mit einer bestimmten Gasmischung einen Laser zu erzeugen und nach einer gewissen Zeit den Betrieb zu unterbrechen. Nun wird das Glasrohr 5 & 3 "gespült" und anschliessend mit einem anderen Gas oder einer anderen Gasmischung beaufschlagt. Erneut wird anschliessend der Laser gezündet, wobei es sich dann beispielsweise um einen Laser in einer anderen Farbe handeln kann oder gar um einen Buntlaser.

Bei den unter Verwendung der Figuren 1 bis 10 beschriebenen Laseranordnungen, handelt es sich selbstverständlich nur um Beispiele, welche auf x-beliebige Art und Weise abgeändert, modifiziert oder durch weitere Elemente ergänzt werden können. Insbesondere wird beim Beschrieb der erfindungsgemässen Laseranordnungen kein Bezug genommen auf allfällige Dimensionierungen, da diese an sich nicht erfindungswesentlich sind. So ist es beispielsweise möglich erfindungsgemässe Laserrohre zu verwenden mit einer Länge von 20cm, 1 m, 2m, etc. Auch die Anzahl der verwendeten Lichtquellen wie insbesondere der LEDS ist an sich unerheblich. So ist es beispielsweise möglich entlang eines 20cm langen Laserrohrs sieben LEDS zu verwenden oder entlang eines Laserrohrs von 1m, 20 oder mehr LEDS oder gegebenenfalls ist es sogar besser, einen sogenannten LED-Array (LED-Bar) zu verwenden. Auch ist es durchaus denkbar anstelle eines Gaslasers einen Festkörper- oder einen Flüssigkeitslaser zu verwenden, wobei letztlich für das Erzeugen des Lasers eine spezifische Lichtquelle verwendet wird, aufweisend diejenige Wellenlänge, welche vom Laser zu erzeugen ist.

Eine interessante Verwendung der Laseranordnung, wie vorgeschlagen in der vorliegenden Erfindung stellt die Bildprojektion mittels Laserprojektor dar. Bei den heute üblicherweise für Bildprojektion verwendeten Laseranordnungen werden jeweils mindestens drei Laserstrahlerzeuger verwendet, nämlich für die Erzeugung eines Rotlichtlasers, eines Grünlichtlasers sowie eines Blaulichtlasers (RGB = Rot, Grün, Blau). Anschliessend erfolgt eine Strahlenvereinigung und der so erzeugte Laserstrahl wird beispielsweise von einem Polygon-Scanner abgelenkt so dass waagrechte Zeilen geschrieben werden. Immer wenn eine Zeile geschrieben wurde lenkt ein zweiter Spiegel den Strahl um eine Zeile weiter nach unten. Kann auch mit nur einem Spiegel (Polygon) realisiert werden der in beide Achsen auslenkbar ist. So wird nach und nach das gesamte Bild dargestellt. Das Prinzip entspricht ganz der Kathodenstrahlröhre, wie man sie von einem Fernseher her kennt. Gemäss der vorliegenden Erfindung kann anstelle der drei erwähnten Laserstrahlerzeuger lediglich eine einzige Laserstrahlanordnung wie vorgeschlagen gemäss der vorliegenden Erfindung verwendet werden, was eine wesentliche Vereinfachung und damit verbunden eine Verbilligung einer derartigen Anordnung ermöglicht.

Weitere Verwendungen stellen beispielsweise das Erzeugen von bestimmten Lasereffekten dar, Lichtvorführungen, die Verwendung zu Belichtungszwecken, für Forschung. Weitere Ausführungsvarianten sind beispielsweise Medizinallaser mit grosser Leistung, kleinem Energieverbrauch sowie wenig Platzbedarf und verschiedenen genau abgestimmter Wellenlängen. Wiederum eine weitere Anwendung sind sogenannte Epiliergeräte, in dem für das Entfernen von Haaren zunächst die gewünschte Wellenlängen durch Farbfilter bestimmt bzw. gemessen werden um anshliessend die optimale Wellenlänge bzw. Wellenlängen des Lasers einzustellen. Auch zur Entfernung von Tätowierungen sowie Behandlung von Melanomen ist diese Art Laser bestens geeignet.

## Patentansprüche

1. Anordnung zum Erzeugen elektromagnetischer Strahlung, wie insbesondere eines Lasers mit einem Hochspannungsanschluss (19) für das Erzeugen der elektromagnetischen Strahlung, **dadurch gekennzeichnet, dass** zusätzlich zum Hochspannungsanschluss mindestens eine weitere elektromagnetische Strahlungsquelle (25) zum Zünden der Strahlung vorgesehen ist.

2. Laseranordnung aufweisend einen Laserstab oder ein Laserrohr (3), sowie einen Hochspannungsanschluss (19) für das Erzeugen des Laserstrahles, **dadurch gekennzeichnet, dass** zusätzlich zum Hochspannungsanschluss mindestens die weitere elektromagnetische Strahlungsquelle (25) im Bereich des Laserstabes oder Laserrohres zum Zünden des Lasers vorgesehen ist.

3. Laseranordnung nach Anspruch 2, **dadurch gekennzeichnet, dass** es sich um eine elektromagnetische Strahlungsquelle jeglicher Art als Laserzünder handelt wie beispielsweise um Mikrowellenstrahlung, IR-Strahlung, UV-Licht, Röntgenstrahlung und dergleichen und/oder eine Kombination davon.

4. Laseranordnung nach einem der Ansprüche 1 bis 3, **dadurch gekennzeichnet, dass** es sich bei der Strahlungsquelle um eine Leucht-Diodenanordnung (LED)(25) handelt.

5. Laseranordnung nach einem der Ansprüche 1 bis 4, **dadurch gekennzeichnet, dass** es sich bei der Strahlungsquelle um eine gepulst betriebene Leucht-Diodenanordnung (25) mit einer Leistung handelt, um in Ergänzung zur angelegten Spannung den Laser zu zünden.

6. Laseranordnung nach einem der Ansprüche 1 bis 5, **dadurch gekennzeichnet, dass** zwei oder mehrere zusätzliche elektromagnetische Strahlungsquellen vorgesehen sind mit unterschiedlichen Wellenlängen bzw. elektromagnetischen Emissionen, um gegebenenfalls bei gleichzeitigem oder sequentiellem, vorzugsweise gepulstem, Betreiben mindestens zwei der zusätzlichen Strahlungsquellen eine Mischfrequenz, Mischfrequenzen, ein vielfaches oder sequentielles Ansteuern im Laserrohr zu erzeugen.

7. Laseranordnung nach einer der Ansprüche 1 bis 4, **dadurch gekennzeichnet, dass** die Strahlungsquelle eine Diodenanordnung (25) ist, mit einer bestimmten Lichtfrequenzemission, beziehungsweise dass die Diodenanordnung eine bestimmte Lichtwellenlänge emittiert, und dass um die Diodenanordnung ein Reflektor angeordnet ist um möglichst alle elektromagnetische Strahlung in den Laserstab bzw. das -rohr zu bündeln.

8. Laseranordnung nach einer der Ansprüche 1 bis 7, **dadurch gekennzeichnet, dass** die Lichtquelle zwei oder mehrere Diodenanordnungen aufweist mit unterschiedlichen Wellenlängen beziehungsweise Farbemissionen, um gegebenenfalls bei gleichzeitigem vorzugsweise gepulsten Betreiben mindestens zweier der Diodenanordnungen eine Mischfarbe im Laserstrahl zu erzeugen.

9. Laseranordnung nach einem der Ansprüche 1 bis 8, **dadurch gekennzeichnet, dass** als Diode- bzw. Strahlungsquelle eine oder mehrere abstimmbare Lichtquellen vorgesehen sind zum Erzeugen individueller Wellenlängen.

10. Laseranordnung nach einer der Ansprüche 1 bis 9, **dadurch gekennzeichnet, dass** die Lichtquelle mindestens zwei oder mehr in Linie entlang dem Laserstab oder dem Laserrohr angeordnete Dioden bzw. Diodenanordnungen aufweist, wobei die Diodenanordnungen entlang dem äusseren Umfang des Stabes oder Rohres bezogen auf den Querschnitt gleichmässig verteilt angeordnet sind.

11. Laseranordnung nach einer der Ansprüche 1 bis 10, **dadurch gekennzeichnet, dass** stabförmig ausgebildete Diodenanordnungen entlang dem Laserstab oder Laserrohr angeordnet sind.

12. Laseranordnung nach einem Ansprüche 1 bis 11, **dadurch gekennzeichnet, dass** mindestens einer der Spiegel endständig angeordnet am Laserstab oder Laserrohr zum Erzeugen des Lasers mittels PIEZO-Aktoren, elektrischen Antriebesmotoren und dergleichen adjustierbar bzw. in Bezug auf den anderen Spiegel einstellbar ist, wobei vorzugsweise eine Regelung vorgesehen ist, zur automatischen Regelung bzw. Adjustierung der Spiegel oder Reflektoren.

13. Laseranordnung nach einem der Ansprüche 1 bis 12, **dadurch gekennzeichnet, dass** die Strahlungsquelle beabstandet vom Laserrohr bzw. Laserstab angeordnet ist.

14. Laseranordnung nach einem der Ansprüche 1 bis 13, **dadurch gekennzeichnet, dass** nachgeschaltet der Strahlungsquelle ein Strahlungsfilter und/oder eine Frequenzverdoppelungsanordnung wie beispielsweise ein Neodym oder Itrium-Aluminium-Granatkristall angeordnet ist sowie temperaturbeständige Lichtwellenleiter zur Übertragung der elektromagnetischen Strahlung an das Laserrohr bzw. den Laserstrahl.

15. Laseranordnung nach einem der Ansprüche 1 bis 14, **dadurch gekennzeichnet, dass** mindestens eine Gaseinlasseinrichtung sowie ein Gasauslass vorgesehen sind sowie beim Gaseinlass eine Mischvorrichtung für Gase, um den Laser mit unterschiedlichen Gasen bzw. Gasmischungen zu beschicken.

16. Verfahren zum Zünden und Betreiben einer elektromagnetischen Strahlung, wie insbesondere zum Zünden einer Lichtquelle, **dadurch gekennzeichnet, dass** zunächst eine Hochspannung angelegt wird mit einer Leistung, welche nicht oder kaum ausreicht zum Zünden der Strahlung bzw. Lichtquelle, und dass die eigentliche Zündung der elektromagnetischen Strahlung bzw. Lichtquelle mittels einer zusätzlichen elektromagnetischen Strahlungsquelle erfolgt.

17. Verfahren nach Anspruch 16 zum Betreiben eines Lasers, **dadurch gekennzeichnet, dass** am Laser eine Hochspannung angelegt wird mit einer Leistung < als 100% der Zündspannung und dass der Laser mittels einer zusätzlichen Strahlungsquelle gezündet und gegebenenfalls betrieben wird.

18. Verfahren nach einem der Ansprüche 16 oder 17, **dadurch gekennzeichnet, dass** die Zündregelung elektronisch erfolgt, indem zuerst der Laser gezündet wird, anschliessend die Leistung auf unter den Zündpunkt reduziert bzw. zurückgeregelt wird, und anschliessend die Zündung und das Betreiben der Strahlung bzw. des Lasers mittels der zusätzlichen Strahlungsquelle gegebenenfalls in einer oder mehrerer gewünschter elektromagnetischer Strahlungsfrequenzen erfolgt.

19. Verfahren nach einem der Ansprüche 16 bis 18, **dadurch gekennzeichnet, dass** die zusätzliche Strahlungsquelle mit einer Leistung betrieben wird, welche mindestens oder mehr als der Differenz zwischen Zündspannung und effektiv angelegter Hochspannung entspricht, derart, dass mittels der Strahlungsquelle der Laser gezündet werden kann.

20. Verfahren nach einem der Ansprüche 16 bis 19, **dadurch gekennzeichnet, dass** als Strahlungsquelle eine Diodenanordnung verwendet wird, welche gepulst betrieben wird.

21. Verfahren nach einem der Ansprüche 16 bis 20, **dadurch gekennzeichnet, dass** als Zündquelle eine Weisslichtquelle wie Quecksilberdampflampe, eine Infrarotquelle, eine UV-Quelle oder Röntgenstrahlen, etc. getrennt oder kombiniert dienen und die emittierten Wellen durch mindestens ein Prisma bzw. Farbfilter oder Monochromator geführt und in die gewünschte Wellenlänge gefiltert werden und vorzugsweise über Lichtwellenleiter wie beispielsweise Glasfasern auf das Laserrohr bzw. den Laserstab gebracht werden.

22. Verfahren nach einer der Ansprüche 16 bis 21, **dadurch gekennzeichnet, dass** zur Erzeugung eines Laserstrahls mit gewünschter Wellenlänge am mittels Spannung betreibbaren Laser eine Hochspannung angelegt wird, welche teilweise der für das Zünden des Lasers notwendigen Zündspannung entspricht und dass das Zünden des Lasers mittels der zusätzlichen Strahlungsquelle erfolgt, welche Licht bzw. Strahlung im gewünschten Wellenlängenbereich emittiert.

23. Verfahren nach einem der Ansprüche 16 bis 22, **dadurch gekennzeichnet, dass** die Wellenlänge der Strahlungsquelle derart ist, dass sie der gewünschten Wellenlänge des zu erzeugenden Laserlichtes entspricht, wobei der Abstand zwischen den beiden Spiegeln, welche für das Erzeugen des Laserstrahles verantwortlich sind, derart ist, dass die gewünschte Wellenlänge erzielt werden kann.

24. Verfahren nach einem der Ansprüche 16 bis 23, **dadurch gekennzeichnet, dass** das Gasgemisch in ein und demselben Laserrohr variable einstellbar ist, und dass mittels Zusammenarbeit von abstimmbarer Strahlungsquelle zum Zünden, dem richtigen Gasgemisch im Laserrohr sowie über die verstellbaren Spiegel zur Modenauskoppelung eine automatische Regelung sowie eine oder mehrere gewünschte Wellenlängen realisiert werden können.

25. Anwendung des Verfahrens zum Betreiben eines Gaslasers, wobei als Gas ein Gasgemisch wie beispielsweise Argon, CO₂ oder Helium-Neon gewählt werden kann.

26. Verwendung der Laseranordnung nach einer der Ansprüche 1 bis 15 für Bildprojektion, Lichtvorführungen, für das Erzeugen von bestimmten Lasereffekten, zu Belichtungszwecken, für Forschung, etc.

27. Verwendung der Laseranordnung nach einem der Ansprüche 1 bis 15 bzw. Anwendung des Verfahrens nach einem der Ansprüche 16 bis 24 als Medizinallaser mit grosser Leistung, kleinem Energieverbrauch sowie wenig Platzbedarf und verschiedenen genau abgestimmter Wellenlängen.

28. Verwendung der Laseranordnung nach einem der Ansprüche 1 bis 15 bzw. Anwendung des Verfahrens nach einem der Ansprüche 16 bis 24 als Epiliergerät zum Messen der gewünschten Wellenlänge durch Farbfilter und darauf Einstellung der optimalen Wellenlänge des Lasers entsprechend der jeweiligen Haarfarbe und anschliessenden Entfernen der Haare.
